# EUROPEAN PATENT SPECIFICATION

(11) **EP 1 697 465 B1**
(45) Date of publication and mention of the grant of the patent: **13.02.2008**
(21) Application number: 04817843.8
(22) Date of filing: 18.11.2004
(51) Int. Cl.: C08J 5/00, C08K 3/34, C08L 83/10, C08L 69/00

(54) **POLYMER NANOCOMPOSITES AND METHODS FOR THEIR PREPARATION**
POLYMER-NANOVERBUNDWERKSTOFFE UND HERSTELLUNGSVERFAHREN DAFÜR
NANOCOMPOSITES POLYMERES ET PROCEDES DE PREPARATION CORRESPONDANTS

(30) Priority: 19.12.2003 US 741361
(43) Date of publication of application: 06.09.2006
(73) Proprietor: GENERAL ELECTRIC COMPANY, Schenectady, NY 12345 (US)
(72) Inventor: GUPTA, Deval, CV Raman Nagar Bangalore 560 093 (IN); TARAIYA, Ajay Kumar, Defence Colony, Bangalore Karnataka 560066 (IN); BANDYOPADHYAY, Sumanda, HAL 2nd Stage Bangalore 560 008 (IN); CHARATI, Sanjay Gurbasappa, Bangalore 560 071 Karnataka (IN); PURUSHOTHAM, A., Andhra Pradesh (IN); GUPTA, Jitendra, Chandigarh 160 019 (IN)
(74) Representative: Modiano, Micaela Nadia
(86) International application number: PCT/US2004/038663
(87) International publication number: WO 2005/061623

(56) References cited:
- GB-A- 1 317 178
- PATENT ABSTRACTS OF JAPAN vol. 1997, no. 03, 31 March 1997 (1997-03-31) & JP 08 302062 A (NATL INST FOR RES IN INORG MATER; SHOWA DENKO KK), 19 November 1996 (1996-11-19)
- YOON P J ET AL: "Polycarbonate nanocomposites. Part 1. Effect of organoclay structure on morphology and properties" POLYMER; POLYMER AUG 7 2003, vol. 44, no. 18, 7 August 2003 (2003-08-07), pages 5323-5339, XP002351748

## Description

### BACKGROUND

The present disclosure generally relates to polymer nanocomposites comprising an untreated phyllosilicate, a delaminating agent, a swelling agent, and a polyorganosiloxane - polycarbonate copolymer. Further, the disclosure relates to methods for preparing and using these polymer nanocomposites, which in turn are useful for making articles.

A nanocomposite can be defined as an interacting mixture of two or more phases, one of which is in the nanometer size range in at least one dimension. The presence of the nanoscopic component is believed to give rise to unique properties and technological opportunities.

Nanocomposite materials comprising polymer and inorganic materials have attracted much attention as the properties of polymers are further enhanced beyond what is achievable from more conventional particulate-filled composites. Layered mica-type silicates have been used as inorganic reinforcements for polymer matrices, such as polyamides, to create polymer nanocomposites with nanoscale dispersion of the inorganic phase within the polymer matrix. However, formation of nanocomposites comprising polyorganosiloxane - polycarbonate copolymers and inorganic clays (or silicates) is a difficult process, mainly due to incompatibility between the clay, and the polycarbonate and/or the polyorganosiloxane domains. As a result, the polycarbonate and/or the polyorganosiloxane cannot diffuse between the clay layers. Common approaches of melt mixing and solution-mixing the polyorganosiloxane - polycarbonate and the inorganic clay may not lead to formation of exfoliated nanocomposites.

It would therefore be desirable to identify and prepare polymer nanocomposites comprising polycarbonate - polyorganosiloxane copolymers such that the nanocomposites have improved performance characteristics, such as a combination of tensile modulus and low temperature ductility, tensile modulus and melt volume rate; and the like.

### BRIEF SUMMARY

Disclosed herein is a polymer nanocomposite comprising an untreated phyllosilicate, a delaminating agent, a swelling agent, and a polyorganosiloxane - polycarbonate copolymer.

In another embodiment, an article comprises a polymer nanocomposite, where the nanocomposite comprises at least one delaminated phyllosilicate, a low weight average molecular weight polycarbonate polymer; and a polyorganosiloxane-polycarbonate block copolymer; where the article has at least one of: a tensile modulus greater than or equal to 105 percent, as measured in accordance with ISO 527 method, relative to an otherwise similar article which is free of the delaminated phyllosilicate and the low weight average molecular weight polycarbonate polymer; a ductile failure temperature higher than or equal to-20°C, as measured in accordance with ASTM D256 method with a 11 joule hammer; and a melt volume rate greater than or equal to 110 percent, as measured in accordance with ASTM D1238 method, relative to an otherwise similar molded article which is free of the delaminated phyllosilicate and the low weight average molecular weight polycarbonate polymer.

In yet another embodiment, a method for preparing a polymer nanocomposite comprises: contacting an untreated phyllosilicate with a delaminating agent selected from the group consisting of an organoonium salt, a Group IV organaometallic compound, and an imidazolium salt in a first solvent; evaporating the first solvent to produce a delaminated phyllosilicate, contacting the delaminated phyllosilicate with a swelling agent in a second solvent to produce an organoclay product, and melt-blending the organoclay product with a thermoplastic polymer comprising a polyorganosiloxane - polycarbonate copolymer to produce the polymer nanocomposite.

The present disclosure may be understood more readily by reference to the following detailed description of the various features of the disclosure and the examples included therein.

### DETAILED DESCRIPTION

Disclosed herein are polymer nanocomposites, generally comprising an untreated phyllosilicate, a delaminating agent, a swelling agent, and a polyorganosiloxane - polycarbonate copolymer. For the purposes of this disclosure, the term "untreated phyllosilicate" is hereinafter defined as a phyllosilicate that does not comprise a delaminating agent. The material resulting from incorporation of a delaminating agent in an untreated phyllosilicate is termed a "delaminated phyllosilicate". If a swelling agent is added to a delaminated phyllosilicate, the resulting material is termed an "organoclay composition".

The term "hydrocarbyl" as used herein is intended to designate aromatic groups, and aliphatic groups, such as alkyl groups. The term "alkyl" as used herein is intended to designate straight chain alkyls, branched alkyls, aralkyls, cycloalkyls, and bicycloalkyl groups. Suitable illustrative non-limiting examples of aromatic groups include, for example, substituted and unsubstituted phenyl groups. The straight chain and branched alkyl groups include as illustrative non-limiting examples, methyl, ethyl, n-propyl; isopropyl, n-butyl, sec-butyl, tertiary-butyl, pentyl, neopentyl, hexyl, heptyl, octyl, nonyl, decyl, undecyl and dodecyl. In various embodiments, cycloalkyl groups represented are those containing about 3 to 12 ring carbon atoms. Some illustrative non-limiting examples of these cycloalkyl groups include cyclobutyl, cyclopentyl, cyclohexyl, methylcyclohexyl, and cycloheptyl. In various other embodiments, aralkyl groups are those containing 7 to 14 carbon atoms; these include, but are not intended to be limited to, benzyl, phenylbutyl, phenylpropyl, and phenylethyl. In various other embodiments, aromatic groups are intended to designate monocyclic or polycyclic moieties containing about 6 to 12 ring carbon atoms. These aryl groups may also contain one or more halogen atoms or alkyl groups substituted on the ring carbons. Some illustrative non-limiting examples of these aromatic groups include phenyl, halophenyl, biphenyl, and naphthyl.

Suitable untreated phyllosilicates generally have sheet-like structures, due in part to the presence of rings of tetrahedrons linked by oxygen atoms and shared with other rings in a two dimensional plane. Layers of cations, such as sodium ions connect the sheet-like structures. The cations are weakly bonded and are surrounded by neutral molecules, such as water molecules. The silicon to oxygen ratio in the untreated phyllosilicates is generally from 1 : 1 to 2.5 : 1. Examples of untreated phyllosilicates include, but are not intended to be limited to, apophyllite, bannisterite, carletonite, cavansite, and chrysocolla; the clay group of phyllosilicates, delhayelite, elpidite, fedorite, franklinfurnaceite, gonyerite, gyrolite, leucosphenite; the mica group of phyllosilicates, minehillite, nordite, pentagonite, petalite, prehnite, rhodesite, sanbornite; and the serpentine group of phyllosilicates. Examples of the clay group of phyllosilicates include chlorite clays such as baileychlore, chamosite, general categories of chlorite mineral, cookeite, nimite, pennantite, penninite, and sudoite; glauconite, illite, kaolinite, montmorillonite, palygorskite, pyrophyllite, sauconite, talc, and vermiculite. Examples of the mica group of untreated phyllosilicates include biotite, lepidolite, muscovite, paragonite, phlogopite, and zinnwaldite. Suitable serpentine phyllosilicates include those having a structure composed of layers of silicate tetrahedrons linked into sheets with layers of magnesium hydroxide interspersed between the silicate sheets. Some non-limiting examples of serpentine phyllosilicates include antigorite ((Mg, Fe)₃Si₂O₅(OH)₄, having a monoclinic structure); clinochrysotile (Mg₃Si₂O₅(OH)₄, having a monoclinic structure); lizardite (Mg₃Si₂O₅(OH)₄, having either a trigonal or a hexagonal structure); orthochrysotile (Mg₃Si₂O₅(OH)₄, having an orthorhombic structure); and parachrysotile ((Mg, Fe)₃Si₂O₅(OH)₄, having an orthorhombic structure). Non-limiting examples of untreated phyllosilicates that are particularly suitable for the organoclay compositions include at least one untreated phyllosilicate selected from the group consisting of allevardite, amesite, hectorite, fluorohectorite, saponite, beidellite, talc, montmorillonite, smectite, illite, sepiolite, palygorskite, muscovite, nontronite, stevensite, bentonite, mica, vermiculite, fluorovermiculite, halloysite, a serpentine clay, and a fluorine-containing synthetic variety of talc. An example of a commercially available phyllosilicate is CLOISITE® 30B, which can be purchased from Southern Clay Products, Inc.

Untreated phyllosilicates generally have an interlayer of exchangeable cations, such as Na⁺, Ca²⁺, K⁺, Mg²⁺. The interlayer cohesive energy is relatively strong, and therefore they will not allow the entry of organic polymer molecules between the phyllosilicate layers. Suitable delaminating agents can increase this inter-layer distance so as to facilitate incorporation of polymer molecules. The delaminating agents also serve to compatibilize the phyllosilicate interlayers with the swelling agent and/or the polymer molecules.

Suitable delaminating agents are selected from the group consisting of organoonium salts, imidazolium salts, and Group IV organometallic compounds. The organoonium delaminating agents include organoonium salts, such as primary, secondary, tertiary, and quaternary ammonium, phosphonium, and sulfonium derivatives of aliphatic, aromatic, or arylaliphatic amines, phosphines, and sulfides, respectively. Suitable organoonium salts can be generally represented by the formula (I):

{(R¹)_{f}Z⁺R²} X⁻, (I)

wherein R¹ independently comprises a hydrogen or a hydrocarbyl radical; "Z" comprises nitrogen, phosphorus, or oxygen, "f" is an integer representing the valency of "Z", R² is an organic radical, and X is a monovalent anion. Suitable examples of X include chloride, bromide, fluoride, acetate.

The organophosphonium, organoammonium, and organosulphonium salts of formula (I) can be prepared from corresponding phosphines, amines, and sulfides, respectively, by using methods generally known in the art. Non-limiting examples of "R¹" include substituted and unsubstituted alkyl, cycloalkyl, aryl, alkaryl, and aralkyl radicals. The "R¹" groups can the same, or different. Non-limiting examples of the organic radical "R²" include substituted and unsubstituted alkyl, cycloalkyl, aryl, alkaryl, and aralkyl. When "R²" is a substituted alkyl, cycloalkyl, aryl, alkaryl, and aralkyl, the substituent is selected from the group consisting of amino, alkylamino, dialkylamino, nitro, azido, alkenyl, alkoxy, cycloalkyl, cycloalkenyl, alkanoyl, alkylthio, alkyl, aryloxy, aralkylamino, alkarylamino, arylamino, diarylamino, aryl, alkylsulfinyl, aryloxy, alkylsulfinyl, alkylsulfonyl, arylthio, arylsulfinyl, alkoxycarbonyl, arylsulfonyl, alkylsilane, and groups of the formulae (II) and (III): 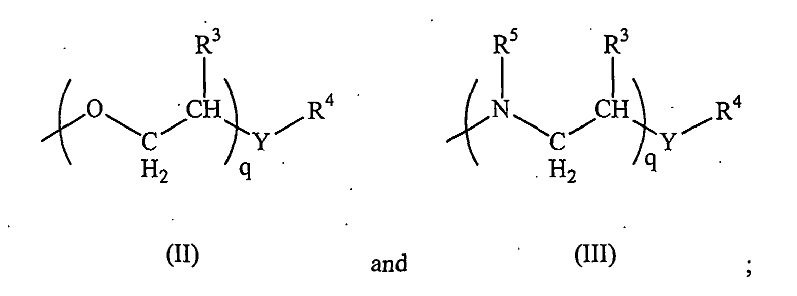 where R³ is selected from the group consisting of hydrogen, alkyl, and aryl; "q" is an integer greater than or equal to one, R⁴ is alkyl, cycloalkyl, or aryl, and "Y" is oxygen or NR⁵, where R⁵ is selected from the group consisting of hydrogen, alkyl, aryl, and alkylsilane. Specific examples of "R²" groups include, but are not limited to hydrogen, alkyl groups, such as methyl, ethyl, octyl, nonyl, tert - butyl, neopentyl, isopropyl, sec - butyl, dodecyl alkenyl groups, such as 1 - propenyl, 1 - butenyl, 1 - pentenyl, 1 - hexenyl, 1 - heptenyl, 1 - octenyl and the like; alkoxy groups, such as propoxy, butoxy, methoxy, isopropoxy, pentyloxy, nonyloxy, ethoxy, octyloxy, and the like; cycloalkenyl groups, such as cyclohexenyl, cyclopentenyl, and the like; alkanoylalkyl groups, such as butanoyl octadecyl, pentanoyl nonadecyl, octanoyl pentadecyl, ethanoyl undecyl, propanoyl hexadecyl, and the like; amino; (alkylamino)alkyl groups, such as methylamino octadecyl, ethylamino pentadecyl, butylamino nonadecyl, dialkylaminoalkyl, such as dimethylamino octadecyl, methylethylamino nonadecyl, and the like; (arylamino)alkyl groups, such as (phenylamino)octadecyl, (p - methylphenylamino)nonadecyl; (diarylamino)alkyl groups, such as (diphenylamino)pentadecyl, (p - nitrophenyl-p'-methylphenylamino)octadecyl, and the like; and (alkarylamino)alkyl, such as (2-phenyl - 4 - methylamino)pentadecyl. Non-limiting examples of sulfur-containing "R²" groups include (butylthio)octadecyl, (neopentylthio)pentadecyl, (methylsulfinyl)nonadecyl, (benzylsulfinyl)pentadecyl, (phenylsulfinyl)octadecyl, (propylthio)octadecyl, (octylthio)pentadecyl, (nonylsulfonyl)nonadecyl, (octylsulfonyl)hexadecyl, (methylthio)nonadecyl, (isopropylthio)octadecyl, (phenylsulfonyl)pentadecyl, (methylsulfonyl)nonadecyl, (nonylthio)pentadecyl, (phenylthio)octadecyl, (ethylthio)nonadecyl, (benzylthio)undecyl, (phenethylthio)pentadecyl, (sec - butylthio)octadecyl, (naphthylthio)undecyl, and the like. Non-limiting examples of "R²" group further include (alkoxycarbonyl)alkyl groups, such as (methoxycarbonyl)ethyl, (ethoxycarbonyl)ethyl, (butoxycarbonyl)methyl, and the like; cycloalkyl groups, such as, cyclohexyl, cyclopentyl, cyclooctyl, cycloheptyl, and the like; alkoxyalkyl such as methoxymethyl, ethoxymethyl, butoxymethyl, propoxyethyl, pentoxybutyl; aryloxyalkyl and aryloxyaryl groups, such as phenoxyphenyl, phenoxymethyl, and the like; aryloxyalkyl groups, such as, phenoxydecyl and phenoxyoctyl; arylalkyl groups, such as benzyl, phenethyl, 8 - phenyloctyl, and 10 - phenyldecyl; alkylaryl groups, such as, 3 - decylphenyl, 4 - octylphenyl, and 4 - nonylphenyl. Non-limiting examples of "R²" comprising groups of formulae (II) and (III) include substituted and unsubstituted polyethylene glycols, polypropylene glycols, and polyethylene amines, polyethyleneimines, and polypropyleneimines. Any mixture comprising two or more compounds selected from the group consisting of an organophosphonium salt, an organoammonium salt, and an organosulphonium salt can also be used.

Substituted and unsubstituted imidazolium salts can also function as effective delaminating agents. An exemplary imidazolium salt is of the general formula (IV): 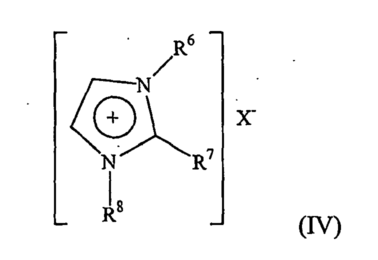 wherein R⁶, R⁷, and R⁸ are independently selected from the group consisting of hydrogen and C₁ - C₂₀ alkyl groups; and X is a monovalent anion. Examples of the monovalent anion include halide anions, such as chloride, bromide, and fluoride; tetrafluoroborate, hexafluorophosphate, bis(trifluoromethylsulfonyl)amido (N(SO₃CF₃)₂)). Specific, non-limiting examples of imidazolium salts include 1,2-dimethyl-3-propylimidazolium chloride, 1,2-dimethyl-3-butylimidazolium chloride, 1,2-dimethyl-3-decylimidazolium chloride, 1,2-dimethyl-3-hexadecylimidazolium bromide, 1,2-dimethyl-3-eicosylimidazolium bromide, 1,2-dimethyl-3-propylimidazolium tetrafluoroborate, 1,2-dimethyl-3-hexadecylimidazolium tetrafluoroborate, 1,2-dimethyl-3-eicosylimidazolium tetrafluoroborate, 1,2-dimethyl-3-butylimidazolium hexafluorophosphate, 1,2-dimethyl-3-decylimidazolium hexafluorophosphate, and 1,2-dimethyl-3-hexadecylimidazolium hexafluorophosphate. The imidazolium tetrafluoroborate and hexafluorophosphate salts are typically thermally more stable (their decomposition onset temperature is in the range from about 375°C to 425°C) than the corresponding halide salts, which generally have decomposition onset temperatures in the range from about 225°C to 275°C.

The organophosphonium salts and imidazolium salts are advantageous in that they are generally more thermally stable than the organoammonium salts and the organosulfonium salts.

Group IV organometallic delaminating agents are of the formula (V):

(R⁹)ₙM(R¹⁰O)₄₋ₙ, (V)

where "M" is a Group IV element selected from the group consisting of silicon, titanium and zirconium; R⁹ and R¹⁰ independently comprise organic groups; and "n" has a value of 0 to 2. The term "organic group" is meant to include all types of organic groups comprising carbon and hydrogen, and additionally those comprising heteroatoms, such as oxygen, nitrogen, sulfur, phosphorus, boron, aluminum, and the like. In one embodiment, the Group IV element is selected from the group consisting of silicon, titanium, and zirconium. Organogermanium and organotin compounds satisfying the formula (V) can also be used. Such organometallic compounds can be prepared by a variety of methods known in the art. A vast array of these organometallic compounds is known in the art. Examples of organosilicon compounds of formula (V) include, but are not intended to be limited to, the symmetrically and unsymmetrically substituted tetraalkyl orthosilicates, tetraalkyl orthotitanates, and tetraalkyl orthozirconates. Non-limiting examples of orthosilicate class of compounds include tetraethyl orthosilicate, tetra(n-propyl) orthosilicate, tetraisopropyl orthosilicate, tetratetrabutyl orthosilicate, tetrakis(dimethylsilyl)orthosilicate, tetraphenyl orthosilicate, tetraethyl orthotitanate, tetramethyl orthotitanate, tetraisopropyl orthotitanate, trimethyl aluminate, triethyl aluminate, tri(n-propyl)aluminate, tri(isopropyl)aluminate, tri(n-butyl)aluminate, tri(sec-butyl)aluminate, tri(tert-butyl_aluminate, tetramethyl zirconate, tetraethyl zirconate, and tetrapropyl zirconate. In another embodiment, the tetraalkyl orthosilicate, tetraalkyl orthotitanate, and tetraalkyl orthozirconate can also have other functional groups, such as hydroxy groups, as exemplified by tetrakis(2-hydroxyethyl)orthosilicate, tetrakis(2-hydroxypropyl)orthosilicate, and the like. Any mixture of two or more of such compounds can also be used. In some embodiments, the organic groups R⁹ and/or R¹⁰ comprise a siloxane fragment.

Other suitable Group (IV) organometallic compounds include oligomeric and polymeric polyalkoxysiloxane compounds, such as for example, linear, branched, and hyperbranched polyalkoxysiloxanes. Hyperbranched polyalkoxysiloxanes, for example, can be easily prepared by controlled partial hydrolysis of tetraalkoxy silanes. Controlled hydrolysis of (organyl)trialkoxysilanes also gives rise to a broad class of poly(organyl)alkoxysiloxanes that can serve as suitable delaminating agents. Other non-limiting examples of Group (IV) organometallic compounds that can be used include the organo(trialkoxy)silanes and the diorgano(dialkoxy)silanes. Non-limiting examples of organo(trialkoxy)silanes include methyltrimethoxysilane, ethyltrimethoxysilane, (3-mercaptopropyl)trimethoxysilane, dimethyldimethoxysilane, Alkoxy metal compounds of silicon and titanium are preferred compounds since these are readily prepared by methods well known in the art, or available commercially, such as for example, the TYZOR series of titanium alkoxy compounds available from DuPont.

The polymer nanocomposites further include a swelling agent for intercalation and/or exfoliation with the untreated phyllosilicate. In an untreated phyllosilicate, the inter-layer distance (that is, the distance between the individual sheet-like structures comprising each layer) is generally about 4 to 10 nanometers, and sometimes from about 10 to 15 nanometers. But when the untreated phyllosilicate is treated with a delaminating agent, such as an organoonium salt or a Group (IV) organometallic compound, the inter-layer distance further increases. For example, treating an untreated phyllosilicate with a tetraorganoammonium salt as the delaminating agent gives a delaminated phyllosilicate where the inter-layer distance increases to about 15 -to 20 nanometers. Further treatment of the delaminated phyllosilicate with a swelling agent results in incorporation of the swelling agent between the phyllosilicate layers, wherein the sheet-like layers are further separated to about 30 to about 40 nanometers.

In one embodiment, the swelling agent is at least one compound selected from the group consisting of an epoxy compound, a low weight average molecular weight polycarbonate polymer, an oligomeric polyester, an oligomeric polyamide, an oligomeric polyether, an oligomeric polyesteramide, an oligomeric polyetherimide, an oligomeric polyimide, an oligomeric polyestercarbonate, an oligomeric polycarbonate - polyorganosiloxane copolymer, and phenolic resols. For the purposes of this disclosure, the oligomers refer to compounds having from about 3 to 15 repeat units derived from the corresponding monomers or comonomers. For example, an oligomeric polyester would refer to materials having from about 3 to 15 of the polyester repeat units. Low weight average molecular weight polycarbonates refer to polycarbonates having from about 3 to 15 repeat units derived from the carbonate ester and the aromatic bisphenol. Low weight average molecular weight polycarbonate oligomers and epoxy compounds are especially efficient swelling agents due to their low cost and ready availability. The low molecular weight polycarbonate preferably have a weight average molecular weight of less than 20,000 daltons in one embodiment, from about 2,000 to 15,000 daltons in another embodiment, and from about 3,000 to 8,000 daltons in still another embodiment.

All molecular weights referred to throughout this disclosure are measured with respect to a polystyrene standard in a chloroform solvent using gel permeation chromatography (GPC).

The low weight average molecular weight polycarbonate is derived from at least one aromatic bisphenol, at least one aliphatic diol, or combinations of at least one aromatic bisphenol and at least one aliphatic diol. In other embodiments, the low weight average molecular weight polycarbonate is one derived from at least one bisphenol selected from the group consisting of 4,4'-(3,3,5-trimethylcyclohexylidene)diphenol, 4,4'-bis(3,5-dimethyl)diphenol, 1,1-bis(4-hydroxy-3-methylphenyl)cyclohexane, 4,4-bis(4-hydroxyphenyl)heptane, 2,4'-dihydroxydiphenylmethane, bis(2-hydroxyphenyl)methane, bis(4-hydroxyphenyl)methane, bis(4-hydroxy-5-nitrophenyl)methane, bis(4-hydroxy-2,6-dimethyl-3-methoxyphenyl)methane, 1,1 -bis(4-hydroxyphenyl)ethane, 1,1-bis(4-hydroxy-2-chlorophenyl)ethane, 2,2-bis(4-hydroxyphenyl)propane, 2,2-bis(3-phenyl-4-hydroxyphenyl)propane, 2,2-bis(4-hydroxy-3-methylphenyl)propane, 2,2-bis(4-hydroxy-3-ethylphenyl)propane, 2,2-bis(4-hydroxy-3-isopropylphenyl)propane, 2,2-bis(4-hydroxy-3,5-dimethylphenyl)propane, 2,2-bis(3,5,3',5'-tetrachloro-4,4'-dihydroxyphenyl)propane, bis(4-hydroxyphenyl)cydohexylmethane, 2,2-bis(4-hydroxyphenyl)-1-phenylpropane, 2,4'-dihydroxyphenyl sulfone, 2,6-dihydroxy naphthalene; hydroquinone; resorcinol, C₁₋₃ alkyl-substituted resorcinols, 3-(4-hydroxyphenyl)-1,1,3-trimethylindan-5-ol, 1-(4-hydroxyphenyl)-1,3,3-trimethylindan-5-ol, 2,2,2',2'-tetrahydro-3,3,3',3'-tetramethyl-1,1'-spirobi[1H-indene]-6,6'-diol, 1-methyl-1,3-bis(4-hydroxyphenyl)-3-isopropylcyclohexane, 1-methyl-2-(4-hydroxyphenyl)-3-[1-(4-hydroxyphenyl)isopropyl]cyclohexane, and combinations thereof; and combinations comprising at least one of the foregoing bisphenols.

In another embodiment, low weight average molecular weight polycarbonates also include those prepared using rigid aliphatic diols, such as 1,4; 3,6-dianhydro-D-glucitol (also sometimes called as "isosorbide") as monomers or comonomers. Isosorbide belongs to the family of hexahydro-furan-(3,2-b)-furane-3,6-diols. Other non-limiting examples of such rigid aliphatic diols include 1,4; 3,6-dianhydro-D-mannitol, and 1,4; 3,6-dianhydro-L-iditol. These oligomeric polycarbonates can be prepared by methods, such as interfacial and melt polymerization techniques.

Bisphenol A homopolycarbonates having a weight average molecular weight from about 3,000 to 8,000 daltons are particularly effective swelling agents to prepare polymer nanocomposites and molded articles therefrom.

The low weight average molecular weight polycarbonate oligomers can be prepared by methods known in the art, such as by reacting aromatic bisphenols with phosgene using an interfacial polycondensation procedure; by polycondensation of an aromatic bisphenol-derived bischloroformate with an aromatic bisphenol or an aliphatic diol, or an aliphatic diol-derived bischlorofonnate with an aliphatic or an aromatic bisphenol, such as for example, reaction of bisphenol A bischloroformate with bisphenol A; and by melt polycondensation of diaryl carbonates with aromatic bisphenols in the presence of a suitable polycondensation catalyst. Furthermore, the polycarbonates produced by the methods described above can have hydroxy, aryloxy, or chloroformate end groups. In a particular embodiment, polycarbonate oligomers prepared using the melt polycondensation of aromatic bisphenols with activated diaryl carbonates having electron withdrawing groups, such as bis(methylsalicyl)carbonate, can be used as swelling agents.

A wide range of epoxy compounds can also function as effective swelling agents. The epoxy compound can either be a monomeric molecule, or an oligomer having one or more epoxy groups, or a polymer having one or more epoxy groups. The epoxy compounds can be easily prepared using a variety of methods known in the art. For example, epichlorohydrin can be reacted with a variety of aliphatic and aromatic mono and polyhydroxy compounds to form the corresponding glycidyl ether derivatives. Non-limiting examples of suitable epoxy compounds include glycidol (1,2-epoxy-3-propanol), diglycidyl ethers of dihydric phenols, such as bisphenol A (available from Shell Chemical Company), pyrocatechol, resorcinol, hydroquinone, 4,4'-dihydroxydiphenyldimethylmethane, 4,4'-dihydroxy-3,3'-dimethyl-diphenylpropane, 4,4'-dihydroxydiphenylsulfone, and the like; glycidyl end-capped poly(bisphenol A-co-epichlorohydrin) oligomers, such as those having number average molecular weight from about 300 to 6,100 daltons; poly[(o-cresyl glycidyl ether)-co-formaldehyde oligomers, such as those having number average molecular weight from about 500 to 1,500 daltons; diglycidyl ether - terminated poly(dimethylsiloxane), poly[dimethylsiloxane-co-[2-(3,4-epoxycyclohexyl)ethyl]methylsiloxane], poly(ethylene-co-glycidyl methacrylate), poly(ethylene-co-methyl acrylate-co-glycidyl methacrylate), poly(ethylene glycol)diglycidyl ether, poly(propylene glycol)diglycidyl ether, allyl glycidyl ether, alkyl glycidyl ethers, such as isopropyl glycidyl ether, n-butyl glycidyl ether, tert-butyl glycidyl ether, and the like; glycidyl ethers of novolak resins, glycidyl esters of aliphatic and aromatic mono and polycarboxylic.acids, such as hexahydrophthalic acid diglycidyl ester; phthalic acid diglycidyl ester, tridecylacetic acid glycidyl ester (also sometimes referred to as "Versatic acid", and available as CARDURA^{™} glydicyl ester E10P from Resolution Performance Products), and the like; glycidyl ethers, such as alpha-naphthyl glycidyl ether, phenyl glycidyl ether, 1,6-hexanediol diglycidyl ether, dodecyl glycidyl ether, hexadecyl glycidyl ether, 2-ethylhexyl glycidyl ether, tetraglycidyl-4',4"-diaminodiphenyl methane (available from Ciba Specialty Chemicals, Incorporated), triglycidyl glycerol, and the like; and glycidyl ethers comprising other functional groups, exemplified by compounds, such as triglycidyl isocyanurate, and N,N'-bis[(3-glycidyloxy)phenyl]pyromellitimide.

The swelling agents described previously can also be used in conjunction with other materials, such as oligomeric poly(olefin-co-maleic anhydride) and oligomeric (olefin-co-maleimide), exemplified by poly(propylene-co-maleic anhydride), poly(propylene-co-maleimide).

The organoclay compositions optionally include a solvent. In one embodiment, the solvent comprises an aromatic hydrocarbon, an aliphatic hydrocarbon, or halogenated hydrocarbon. More particularly, the solvent is selected from the group consisting of toluene, xylenes (any combination of the isomeric ortho-, meta-, and para-xylene), dichloromethane and dichloroethane as these are readily available and inexpensive solvents. Moreover, these solvents when present in the organoclay compositions can be readily removed by heating, with or without applying a vacuum.

The organoclay compositions described above are preferably prepared by contacting an untreated phyllosilicate with a delaminating agent selected from the group consisting of organoonium salts, imidazolium salts, and Group IV organaometallic compounds in a first solvent; evaporating the first solvent to produce a delaminated phyllosilicate; contacting the delaminated phyllosilicate with a swelling agent, optionally in a second solvent to produce a first product; and evaporating the second solvent, if present, from the first product to produce the organoclay composition. In some cases, the untreated phyllosilicate can be treated with a delaminating agent directly without using a first solvent. The first solvent and the optional second solvent independently comprise an aromatic hydrocarbon, an aliphatic hydrocarbon, or a halogenated hydrocarbon. The second solvent is optional because in some embodiments, the combination of the second solvent and the organoclay material can be directly used for admixture with a polymer matrix. However, if the presence of the second solvent is not desirable in the next step, it can be evaporated to produce an essentially solvent-free organoclay composition. By the term "essentially solvent-free" is meant the organoclay composition has less than 2 weight percent of the second solvent relative to the overall weight of the organoclay composition.

The organoclay compositions described above are useful materials for preparing polymer nanocomposites. These polymer nanocomposites are obtained by admixing at least one polyorganosiloxane - polycarbonate block copolymer, random copolymer, or mixtures thereof, with the organoclay composition. More particularly, polyorganosiloxane - polycarbonate block copolymers can be used for preparing the polymer nanocomposites. Moreover, the polymer nanocomposites comprising the polyorganosiloxane - polycarbonate copolymers in general, and block copolymers in particular can be admixed with a variety of other thermoplastic or thermoset polymers (which can be regarded as matrix polymers), to produce a variety of useful thermoset polymer nanocomposites and thermoplastic polymer nanocomposites, respectively. Any thermoplastic polymer can be used for this purpose. Non-limiting examples of matrix thermoplastic polymers include at least one polymer selected from the group consisting of polycarbonate, polyester, polyimide, polyamide, polyetherimide, polyarylene ether, olefinic nitrile - diene -alkenyl aromatic compound copolymer, olefinic nitrile - alkenyl aromatic compound - acrylate copolymer, polysulfone, polyarylene sulfide, polyolefin, and combinations of the foregoing thermoplastic polymers. Non-limiting examples of polycarbonates that can be used include homopolycarbonate and copolycarbonates prepared using aromatic bisphenols, such as bisphenol A as a monomer or comonomer.

The polyorganosiloxane-polycarbonate block copolymer comprises polyorganosiloxane blocks having siloxane units of the formula (VI): 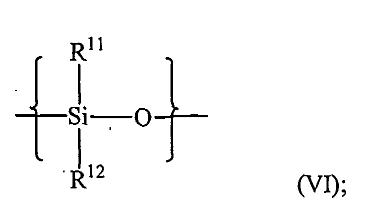 where R¹¹ and R¹² are each independently hydrogen, hydrocarbyl or halogen-substituted hydrocarbyl. Preferred R¹¹ and R¹² groups are each methyl; and in another embodiment, R¹¹ is a methyl; and R¹² is a phenyl, alpha-methylphenethyl, or combinations thereof. In an embodiment, the polyorganosiloxane-polycarbonate block copolymer comprises polyorganosiloxane blocks having the formula (VII): 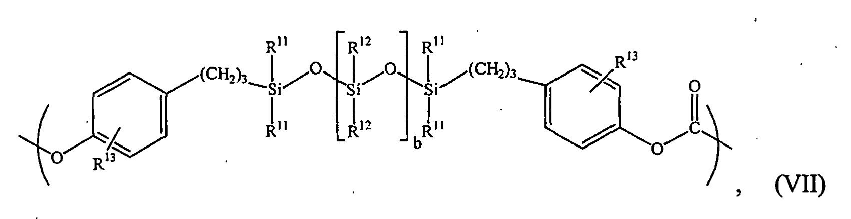 where R¹¹ and R¹² are each independently hydrogen, hydrocarbyl or halogen-substituted hydrocarbyl; "b" is an integer from about 10 to 120, and R¹³ is hydrogen, hydrocarbyl, hydrocarbyloxy or halogen; and a polycarbonate block having the formula (VIII): 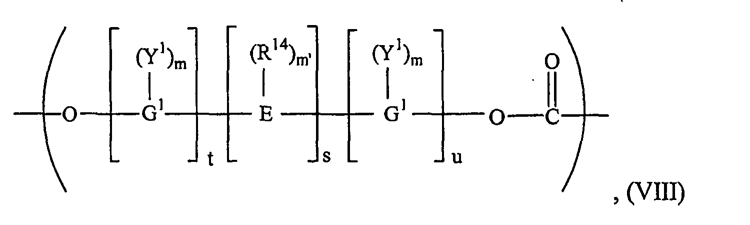 where G¹ is independently an aromatic group; E is an alkylene, an alkylidene, a cycloaliphatic group; a sulfur-containing linkage, a phosphorus-containing linkage; an ether linkage, a carbonyl group, or a tertiary nitrogen group, R¹⁴ is independently a hydrogen or a monovalent hydrocarbon group; Y¹ is independently selected from the group consisting of a monovalent hydrocarbon group, alkenyl, allyl, halogen, bromine, chlorine; nitro; "m" represents any integer from and including zero through the number of positions on G¹ available for substitution; m' represents an integer from and including zero through the number of positions on E available for substitution; "t" represents an integer equal to at least one; "s" is either zero or one; and "u" represents any integer including zero. In a particular embodiment, the R¹¹ and R¹² groups are each methyl; and in another embodiment, R¹¹ is a methyl; and R¹² is a phenyl, alpha-methylphenethyl, or combinations thereof. Preferred bisphenols useful for the carbonate blocks of formula (VIII) include, but are not intended to be limited to bisphenol A, 1,1-bis(4-hydroxyphenyl)cyclohexane, and 1,1-bis(4-hydroxyphenyl)-3,3,5-trimethylcyclohexane.

A variety of relatively short and relatively long block lengths for the siloxane units shown in formulas (VI) and (VII) can be used. Thus for example, the integer "b" in formula (VII) can have a value from about 2 to about 10 in one embodiment, and from about 2 to 5 in another embodiment. In other embodiments, the integer "b" in formula (VIII) can have a value from about 30 to 70 in one embodiment, and from about 40 to 55 in another embodiment. The weight average molecular weight of the block copolymer is from about 20,000 to 80,000 daltons one embodiment, and from about 30,000 to 60,000 daltons in another embodiment. A specific example of a polyorganosiloxane - polycarbonate block copolymer is shown in formula (IX): 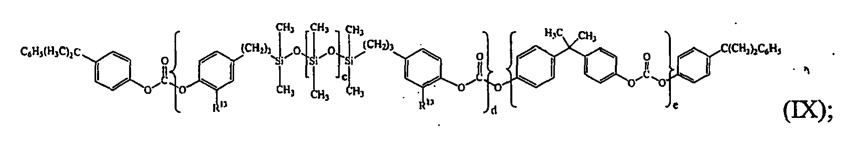 where R¹³ is a methoxy group, "c" has a value of about 20 to 60, preferably 50, and the siloxane blocks comprise from about 5 to 10 percent by weight of the block copolymer. Further, in formula (IX), "d" has a value from 2 to 3; and "e" has a value from 170 to about 180. The copolymer has a weight average molecular weight of 57,000 daltons.

Examples of the bisphenol used for producing the polycarbonate block of formula VIII include, but are not intended to be limited to 4,4'-(3,3,5-trimethylcyclohexylidene)diphenol, 4,4'-bis(3,5-dimethyl)diphenol, 1,1-bis(4-hydroxy-3-methylphenyl)cyclohexane, 4,4-bis(4-hydroxyphenyl)heptane, 2,4'-dihydroxydiphenylmethane, bis(2-hydroxyphenyl)methane, bis(4-hydroxyphenyl)methane, bis(4-hydroxy-5-nitrophenyl)methane, bis(4-hydroxy-2,6-dimethyl-3-methoxyphenyl)methane, 1,1-bis(4-hydroxyphenyl)ethane, 1,1-bis(4-hydroxy-2-chlorophenyl)ethane, 2,2-bis(4-hydroxyphenyl)propane, 2,2-bis(3-phenyl-4-hydroxyphenyl)propane, 2,2-bis(4-hydroxy-3-methylphenyl)propane, 2,2-bis(4-hydroxy-3-ethylphenyl)propane, 2,2-bis(4-hydroxy-3-isopropylphenyl)propane, 2,2-bis(4-hydroxy-3,5-dimethylphenyl)propane, 2,2-bis(3,5,3',5'-tetrachloro-4,4'-dihydroxyphenyl)propane, bis(4-hydroxyphenyl)cyclohexylmethane, 2,2-bis(4-hydroxyphenyl)-1-phenylpropane, 2,4'-dihydroxyphenyl, sulfone, 2,6-dihydroxy naphthalene; hydroquinone; resorcinol, C₁₋₃ alkyl-substituted resorcinols, 3-(4-hydroxyphenyl)-1,1,3-trimethylindan-5-ol, 1-(4-hydroxyphenyl)-1,3,3-trimethylindan-5-ol, 2,2,2',2'-tetrahydro-3,3,3',3'-tetramethyl-1,1'-spirobi[1H-indene]-6,6'-diol, 1-methyl-1,3-bis(4-hydroxyphenyl)-3-isopropylcyclohexane, 1-methyl-2-(4-hydroxyphenyl)-3-[1-(4-hydroxyphenyl)isopropyl]cyclohexane, and combinations thereof; and combinations comprising at least one of the foregoing bisphenols.

In one embodiment, a polymer nanocomposite comprises at least one polyorganosiloxane - polycarbonate block copolymer, and at least one matrix polycarbonate polymer, wherein the at least one matrix polycarbonate polymer comprises structural units derived from at least one bisphenol of the formula (X): 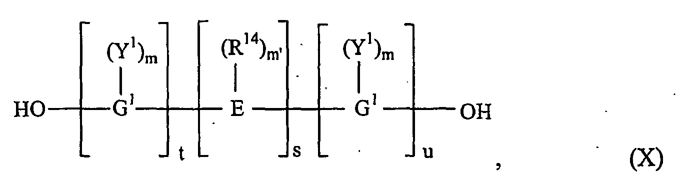 where G¹ is independently an aromatic group; E is an alkylene, an alkylidene, a cycloaliphatic group; a sulfur-containing linkage, a phosphorus-containing linkage; an ether linkage, a carbonyl group, or a tertiary nitrogen group, R¹⁴ is independently a hydrogen or a monovalent hydrocarbon group; Y¹ is independently selected from the group consisting of a monovalent hydrocarbon group, alkenyl, allyl, halogen, bromine, chlorine; nitro; "m" represents any integer from and including zero through the number of positions on G¹ available for substitution; m' represents an integer from and including zero through the number of positions on E available for substitution; "t" represents an integer equal to at least one; "s" is either zero or one; and "u" represents any integer including zero.

In the bisphenol of formula (X), G¹ represents an aromatic group, such as phenylene, biphenylene, naphthylene, and the like aromatic groups. E may be an alkylene or alkylidene group such as methylene, ethylene, ethylidene, propylene, propylidene, isopropylidene, butylene, butylidene, isobutylidene, amylene, amylidene, isoamylidene, and the like. Alternatively, E may consist of two or more alkylene or alkylidene groups connected by a moiety different from alkylene or alkylidene, such as an aromatic linkage, a tertiary amino linkage, an ether linkage, a carbonyl linkage, a sulfur-containing linkage such as sulfide, sulfoxide, sulfone, a phosphorus-containing linkage such as phosphinyl, phosphonyl, and like linkages. In addition, E may comprise a cycloaliphatic group. R¹⁴ independently represents a monovalent hydrocarbon group such as alkyl, aryl, aralkyl, alkaryl, cycloalkyl, and the like. Y¹ comprises a halogen (e.g., fluorine, bromine, chlorine, iodine, and the like); a nitro group; an alkenyl group, allyl group, the same as R¹⁴ as previously described, an oxy group such as OR. In a preferred embodiment, Y¹ is inert to and unaffected by the reactants and reaction conditions used to prepare the polymer. The letter "m" represents any integer from and including zero through the number of positions on G¹ available for substitution; "p" represents an integer from and including zero through the number of positions on E available for substitution; "t" represents an integer equal to at least one; "s" is either zero or one; and "u" represents any integer including zero.

Suitable bisphenols from which the matrix polycarbonate polymer is derived can be selected from the group consisting of 4,4'-(3,3,5-trimethylcyclohexylidene)diphenol, 4,4'-bis(3,5-dimethyl)diphenol, 1,1-bis(4-hydroxy-3-methylphenyl)cyclohexane, 4,4-bis(4-hydroxyphenyl)heptane, 2,4'-dihydroxydiphenylmethane, bis(2-hydroxyphenyl)methane, bis(4-hydroxyphenyl)methane, bis(4-hydroxy-5-nitrophenyl)methane, bis(4-hydroxy-2,6-dimethyl-3-methoxyphenyl)methane, 1,1-bis(4-hydroxyphenyl)ethane, 1,1-bis(4-hydroxy-2-chlorophenyl)ethane, 2,2-bis(4-hydroxyphenyl)propane, 2,2-bis(3-phenyl-4-hydroxyphenyl)propane, 2,2-bis(4-hydroxy-3-methylphenyl)propane, 2,2-bis(4-hydroxy-3-ethylphenyl)propane, 2,2-bis(4-hydroxy-3-isopropylphenyl)propane, 2,2-bis(4-hydroxy-3,5-dimethylphenyl)propane, 2,2-bis(3,5,3',5'-tetrachloro-4,4'-dihydroxyphenyl)propane, bis(4-hydroxyphenyl)cyclohexylmethane, 2,2-bis(4-hydroxyphenyl)-1-phenylpropane, 2,4'-dihydroxyphenyl sulfone, 2,6-dihydroxy naphthalene; hydroquinone; resorcinol, C₁₋₃ alkyl-substituted resorcinols, 3-(4-hydroxyphenyl)-1,1,3-trimethylindan-5-ol, 1-(4-hydroxyphenyl)-1,3,3-trimethylindan-5-ol, 2,2,2',2'-tetrahydro-3,3,3',3'-tetramethyl-1,1'-spirobi[1H-indene]-6,6'-diol, 1-methyl-1,3-bis(4-hydroxyphenyl)-3-isopropylcyclohexane, 1-methyl-2-,(4-hydroxyphenyl)-3-[1-(4-hydroxyphenyl)isopropyl]cyclohexane, and combinations thereof; and combinations comprising at least one of the foregoing bisphenols.

In some embodiments, suitable matrix polycarbonate polymers can be prepared using rigid aliphatic diols, exemplified by the hexahydro-furan-(3,2-b)-furane-3,6-diols, as monomers or comonomers. Polycarbonates prepared using isosorbide as a monomer or as a comonomer with one or more aromatic bisphenol comonomers, such as bisphenol A, can also be used to prepare the matrix polycarbonate polymer.

Polymer nanocomposites comprising a polyorganosiloxane - polycarbonate block copolymer preferably include a swelling agent in an amount of 1 weight percent to 20 weight percent, and more preferably, in an amount of 1 weight percent to 10 weight percent based, on the total weight of the polymer nanocomposite composition. The organoclay component, comprising an untreated phyllosilicate, a delaminating agent, and a swelling agent, comprises preferably from 0.1 weight percent to 22 weight percent of the overall polymer nanocomposite comprising the polyorganosiloxane - polycarbonate block copolymer. The relative weight ratio of the swelling agent to the delaminated phyllosilicate can vary over a wide range, from 0.5 to 2,000 in one embodiment, from about 1 to 100 in another embodiment, and from about 1 to 10 in yet another embodiment

The polymer nanocomposites are generally prepared by contacting an untreated phyllosilicate with a delaminating agent in a first solvent. The delaminating agent dissolves in the first solvent and facilitates thorough mixing with the untreated phyllosilicate. The solvent is then removed, followed by treatment of the resulting delaminated phyllosilicate with a swelling agent in a second solvent to produce an organoclay product as a dispersion in the second solvent. The organoclay dispersion can be directly melt-blended with a thermoplastic polymer to produce the desired thermoplastic polymer nanocomposite. The elevated temperature conditions prevailing during the melt blending process will serve to evaporate the second solvent. Furthermore, it leads to a more efficient incorporation of the polymer within the organoclay layers, thereby improving exfoliation, i.e., the clay layers are expanded to greater than or equal to 60% relative to the inter-layer separation in the untreated phyllosilicate. In another embodiment, the second solvent is removed to furnish an essentially solvent-free organoclay product, which is then melt-blended with a thermoplastic polymer to produce the thermoplastic polymer nanocomposite. Low weight average molecular weight polycarbonate oligomers, such as those prepared from reaction of bisphenol A and a carbonic acid derivative, are particularly useful swelling agents for preparing such thermoplastic polymer nanocomposites.

For both methods of preparing the thermoplastic nanocomposite, the term "essentially solvent-free" is taken to mean that the residual solvent level is less than or equal to about two weight percent relative to the total weight of the thermoplastic nanocomposite. Further, in both methods, the first solvent preferably comprises water, an aliphatic alcohol miscible with water, or combinations of the foregoing first solvents. A preferred solvent comprises water or mixtures of water with ethanol or methanol. The second solvent is selected from the group consisting of aliphatic hydrocarbons, aromatic hydrocarbons, halogenated hydrocarbons, and combinations of the foregoing second solvents. The melt blending step is carried out at a temperature from 150°C to 400°C in one embodiment, and from 200°C to 300° in another embodiment. The desired operating temperature depends upon the nature of the organoclay composition and the nature of the matrix thermoplastic polymer. The weight average molecular weight of the oligomeric polycarbonate used in both methods is generally less than or equal to 20,000 daltons in one embodiment, 1000 to 10,000 daltons in a second embodiment, and 3000 to 8000 daltons in a third embodiment. The methods are very useful for preparing polymer nanocomposites comprising one or more polyorganosiloxane - polycarbonate block copolymer and any matrix thermoplastic polymer, more particularly a polycarbonate polymer.

Polymer nanocomposites described hereinabove may also contain one or more additives generally used in polymer processing, such as antioxidants, processing aids, heat stabilizers, ultraviolet (hereinafter referred to as "UV") stabilizers, fire retardants, colorant compositions and the like. Non-limiting examples of antioxidants suitable for use in the present disclosure include phosphites, phosphonites, hindered phenols, and other antioxidants known in the art. Some examples of phosphites and phosphonite type antioxidants include tris(2,4-di-tert-butylphenyl) phosphite, 3,9-di(2,4-di-tert-butylphenoxy)-2,4,8,10-tetraoxa-3,9-diphosphaspiro[5.5]undecane, 3,9-di(2,4-dicumylphenoxy)-2,4,8,10-tetraoxa- 3,9-diphosphaspiro[5.5]undecane, tris(p-nonylphenyl) phosphite, 2,2',2"- nitrilo[triethy]-tris[3,3',5,5'-tetra-tertbutyl-1,1'-biphenyl-2'- diyl]phosphite], 3,9-distearyloxy-2,4,8,10-tetraoxa-3,9-diphosphaspiro[5. 5]undecane, dilauryl phosphite, 3,9-di[2,6-di-tert-butyl-4-methyl- phenoxy]-2,4,8,10-tetraoxa-3,9-diphosphaspiro[5.5]undecane and tetrakis(2, 4-di-tert-butylphenyl) 4,4'-bis(diphenylene)phosphonite, distearyl pentaerythritol diphosphite, diisodecyl pentaerythritol diphosphite, 2,4, 6-tri-tert-butylphenyl-2-butyl-2-ethyl-1,3-propanediol phosphite, tristearyl sorbitol triphosphite, tetrakis(2,4-di-tert-butylphenyl)4,4'-biphenylene diphosphonite, (2,4,6-tri-tert-butylphenyl)-2-butyl-2-ethyl-1, 3-propanediolphosphite, tri-isodecylphosphite, and mixtures of phosphites containing at least one of the foregoing. Preferred antioxidants are the hindered phosphites.

Non-limiting examples of processing aids that can be used include Doverlube® FL-599 (available from Dover Chemical Corporation), Polyoxyter® (available from Polychem Alloy Inc.), Glycolube P (available from Lonza Chemical Company), pentaerythritol tetrastearate, Metablen A-3000 (available from Mitsubishi Rayon), neopentyl glycol dibenzoate, Pentaerythritol tetrastearate can be preferably used.

Non-limiting examples of UV stabilizers that can be used include hindered amine light stabilizers; and benzotriazoles. Non-limiting examples of UV stabilizers include 2-(2'-hydroxyphenyl)-benzotriazoles, e.g., the 5'-methyl-, 3',5'-di- tert.-butyl-, 5'-tert.-butyl-, 5'-(1,1,3,3-tetramethylbutyl)-, 5-chloro- 3',5'-di-tert.-butyl-, 5-chloro-3'-tert.-butyl-5'-methyl-, 3'-sec.-butyl- 5'-tert.-butyl-, 3'-alpha -methylbenzyl -5'-methyl, 3'-alpha- methylbenzyl-5'-methyl-5-chloro-, 4'-hydroxy-, 4'-methoxy-, 4'-octoxy-, 3',5'-di-tert.-amyl-, 3'-methyl-5'-carbomethoxyethyl-, 5-chloro-3',5'- di-tert-amyl-derivative, and Tinuvin® 234 (available from Ciba Specialty Chemicals). 2,4-bis-(2'-Hydroxyphenyl)-6-alkyl-s-triazines, e.g., the 6-ethyl-, 6- heptadecyl- or 6-undecyl-derivative. 2-Hydroxybenzophenones e.g., the 4-hydroxy-, 4-methoxy-, 4-octoxy-, 4-decyloxy-, 4-dodecyloxy-, 4-benzyloxy-, 4,2',4'-trihydroxy-, 2,2',4,4'- tetrahydroxy- or 2'-hydroxy-4,4'-dimethoxy-derivative. 1,3-bis-(2'-Hydroxybenzoyl)-benzenes, e.g., 1,3-bis-(2'-hydroxy-4'- hexyloxy-benzoyl)-benzene, 1,3-bis-(2'-hydroxy-4'-octyloxy-benzoyl)- benzene or 1,3-bis-(2'-hydroxy-4'-dodecyloxybenzoyl)-benzene. Esters of optionally substituted benzoic acids, example, phenylsalicylate octylphenylsalicylate, dibenzoylresorcin, bis-(4-tert.-butylbenzoyl)- resorcin, benzoylresorcin, 3,5-di-tert.-butyl-4-hydroxybenzoic acid-2,4- di-tert.-butylphenyl ester or -octadecyl ester or -2-methyl-4,6-di-tert.- butyl ester. Acrylates, e.g., alpha -cyano- beta, beta - diphenylacrylic acid-ethyl ester or isooctyl ester, alpha -carbomethoxy-cinnamic acid methyl ester, alpha-cyano-beta-methyl-p-methoxy-cinnamic acid methyl ester or - butyl ester or N(beta-carbomethoxyvinyl)-2-methyl-indoline. Oxalic acid diamides, e.g., 4,4'-di-octyloxy-oxanilide, 2,2'-di- octyloxy-5,5'-di-tert.-butyl-oxanilide, 2,2'-di-dodecyloxy-5,5-di-tert.- butyl-oxanilide, 2-ethoxy-2'-ethyl-oxanilide, N,N'-bis-(3-dimethyl- aminopropyl)-oxalamide, 2-ethoxy-5-tert.-butyl-2'-ethyloxanilide and the mixture thereof with 2-ethoxy-2'-ethyl-5,4'-di-tert.-butyl-oxanilide, or mixtures of orlho- and para-methoxy- as well as of o- and p-ethoxy- disubstituted oxanilides.

Non-limiting examples of fire retardants that can be used include potassium nonafluorobutylsulfonate, potassium diphenylsulfone sulfonate, and monomeric and/or oligomeric phosphate esters of polyhydric phenols, such as resorcinol and bisphenol A; and combinations thereof.

The polymer nanocomposites may further comprise other additives, such as for example, mold release agents, drip retardants, nucleating agents, dyes, pigments, particulate material, conductive fillers (e.g., conductive carbon black, and vapor grown carbon fibers having an average diameter of about 3 to 500 nanometers), reinforcing fillers, anti-static agents, and blowing agents. Reinforcing fillers may include, for example, inorganic and organic materials, such as fibers, woven fabrics and non-woven fabrics of the E-, NE-, S-, T- and D-type glasses and quartz; carbon fibers, including poly(acrylonitrile) (PAN) fibers, vapor-grown carbon fibers, and especially graphitic vapor-grown carbon fibers; potassium titanate single-crystal fibers, silicon carbide fibers, boron carbide fibers, gypsum fibers, aluminum oxide fibers, asbestos, iron fibers, nicked fibers, copper fibers, wollastonite fibers; and the dike. The reinforcing fillers may be in the form of glass roving cloth, glass cloth, chopped glass, hollow glass fibers, glass mat, glass surfacing mat, and non-woven glass fabric, ceramic fiber fabrics, and metallic fiber fabrics. In addition, synthetic organic reinforcing fillers may also be used including organic polymers capable of forming fibers. Illustrative examples of such reinforcing organic fibers are poly(ether ketone), polyimide benzoxazole, poly(phenylene sulfide), polyesters, aromatic polyamides, aromatic polyimides or polyetherimides, acrylic resins, and poly(vinyl alcohol). Fluoropolymers such as polytetrafluoroethylene may be used. Also included are natural organic fibers known to one skilled in the art, including cotton cloth, hemp cloth, and felt, carbon fiber fabrics, and natural cellulosic fabrics, such as Craft paper, cotton paper, and glass fiber containing paper. Such reinforcing fillers could be in the form of monofilament or multifilament fibers and could be used either alone or in combination with another type of fiber, through, for example, co-weaving or core- sheath, side-by-side, orange-type, or matrix and fibril constructions, or by other methods known to one skilled in the art of fiber manufacture. They may be in the form of, for example, woven fibrous reinforcements, non-woven fibrous reinforcements, or papers. Talc can also be used as a reinforcing filler.

Polymer nanocomposites disclosed herein have a number of useful properties including, among others, improved low temperature impact at temperatures higher than or equal to -20°C with retention of low temperature modulus and ductility.

Polymeric materials generally become more brittle at lower temperatures. Hence the nanocomposites disclosed herein effectively address this performance issue. In another aspect, these nanocomposites offer improved processibility and ease of achieving flame retardance. Furthermore, these nanocomposites can be blended with various proportions of other polycarbonates (of varying glass transition temperatures and other properties, such as flexural modulus, impact, flow, and the like) to prepare materials with improved mechanical properties and capable of meeting a wide range of requirements for high and low temperature performance.

When a polymer composition comprising a polyorganosiloxane - polycarbonate block copolymer and any thermoplastic polymer is used for producing a molded article, the article generally has a reduced modulus relative to the article that does not comprise the polyorganosiloxane - polycarbonate block copolymer. But polymer nanocomposites comprising an untreated phyllosilicate, a delaminating agent, a swelling agent, a polyorganosiloxane - polycarbonate block copolymer, and at least one thermoplastic polymer, as described above, have significantly improved properties. Addition of a reinforcing filler to a matrix polymer generally increases the tensile modulus of the resulting composition, but the compositions generally do not maintain the ductile failure mode exhibited by the matrix polymer. Hence improvement in modulus is achieved at the cost of low temperature ductility. For example, certain blends of BPA polycarbonate and polycarbonate - polyorganosiloxane block copolymer are known to exhibit ductile failure mode at - 20°C. When fillers, such as silicon carbide or talc are blended with these blends of BPA polycarbonate and polycarbonate - polyorganosiloxane block copolymer, the resulting compositions show improved modulus, but they do not maintain the low temperature ductile failure mode exhibited initially by the matrix polymer. However, as will be evident from the Examples section later in this disclosure, addition of as untreated phyllosilicate, together with a delaminating agent, a swelling agent to such blends of BPA polycarbonate and polycarbonate - polyorganosiloxane block copolymer not only improves the modulus of the resulting nanocomposites, but also maintain the low temperature ductile failure mode at -20°C.

The molded article comprising the polymer nanocomposites have a tensile modulus greater than or equal to about 105 percent, as measured in accordance with ISO 527 method in one embodiment; a ductile failure temperature higher than or equal to about -20° C, as measured in accordance with ASTM D256 method with a 11 joule hammer in another embodiment; and a melt volume rate (also sometimes abbreviated as "MVR") greater than or equal to 110 percent, as measured in accordance with ASTM D1238 method, in a third embodiment; relative to an otherwise similar molded article which does not comprise a delaminated phyllosilicate and a low weight average molecular weight polycarbonate polymer. Depending upon the nature of the individual materials constituting the thermoplastic nanocomposites, it is sometimes likely that one can achieve enhancement in more than one of the properties listed above. Thus, in an embodiment, an article comprising a polymer nanocomposite comprising at least one delaminated phyllosilicate, a low weight average molecular weight polycarbonate swelling agent; a polyorganosiloxane-polycarbonate block copolymer, and a thermoplastic polymer has at least one of a tensile modulus greater than or equal to 105 percent, as measured in accordance with ISO 527 method; a ductile failure temperature higher than or equal to -20°C, as measured in accordance with ASTM D256 method; and a melt volume rate greater than or equal to 110 percent, as measured in accordance with ASTM D1238 method; relative to an otherwise similar molded article which does not comprise the delaminated phyllosilicate and the low weight average molecular weight polycarbonate polymer, and measured under the same conditions. One of ordinary skill in the art can take an article, take a portion of it, and measure its MVR. But typically, the MVR measurement is made with pellets of the polymer nanocomposite. In addition, the nanocomposites can potentially exhibit improvements in other properties, such as heat distortion temperature, vapor barrier and/or reduced permeability to gases, and chemical resistance, making them especially suitable for manufacturing articles, such as for example, those relating to the automotive, aerospace, electronic, pharmaceutical, apparel, food, and optical applications.

The compositions of the polymer nanocomposites can also be suitably tailored to achieve other beneficial properties, such as transparency, translucency, and opacity; and pigmentation by use of pigments.

The molding compositions disclosed herein are prepared by mechanically blending the organoclay composition and one or more polyorganosiloxane - polycarbonate copolymers, with or without other thermoplastic or thermoset polymers, as described previously, in conventional mixing equipment, e.g., a single or twin-screw extruder, Banbury mixer, or any other conventional melt compounding equipment. When an organoclay composition containing solvent is used for blending with one or more thermoplastic or thermoset polymers, a vacuum may also be applied to the equipment during the compounding operation to contain emission of volatile organic solvent from the composition. The order in which the components of the composition are mixed is not generally critical and may be readily determined by one of skill in this art.

In one embodiment, a method for preparing the polymer nanocomposites comprises preparing the delaminated phyllosilicate in a separate step by treating an untreated phyllosilicate with a delaminating agent; and subsequently dry-blending or melt-blending the delaminated phyllosilicate with a swelling agent and one or more polymers. In another embodiment, a method for preparing the polymer nanocomposites comprises preparing a masterbatch of the organoclay composition as described above, followed by blending a portion of this masterbatch with one or more polyorganosiloxane - polycarbonate copolymers, with or without other thermoplastic or thermoset polymers

The molding compositions described hereinabove are valuable for producing a variety of useful articles, such as outdoor enclosures for electrical and telecommunications interface devices, smart network interface devices, exterior and interior vehicle parts, external housings for garden equipment, and exterior and interior building and construction parts. Non-limiting examples of articles include those comprising exterior and interior automotive parts, window frames, window profiles, gutters, downspouts, siding, automotive bumper, doorliner, tailgate, interior parts, and fender; external housing for garden equipment, and snow scooter. The polymer nanocomposites disclosed herein can also be used for forming durable coatings, especially thin coatings on the order of microns, by using various coating techniques known in the art, such as for example, high-velocity oxy-fuel thermal spraying, and high-thrust high-velocity oxy-fuel spraying methods. Polymer nanocomposites comprising the polyorganosiloxane - polycarbonate block copolymer and at least one other polycarbonate (which is not a polyorganosiloxane - polycarbonate copolymer) are especially useful in this regard.

Montmorillonite is a preferred untreated phyllosilicate due to its ready availability and low cost. In a preferred embodiment, the thermoplastic polymer nanocomposite for producing an article comprises less than or equal to about 10 weight percent of montmorillonite, less than or equal to 20 weight percent of a low weight average molecular weight polycarbonate polymer, less than or equal to 5 weight percent of a delaminating agent; less than or equal to 25 weight percent of a polyorganosiloxane-polycarbonate block copolymer having a weight average molecular weight from 40,000 to 60,000 daltons; and greater than or equal to 50 weight percent of a bisphenol A homopolycarbonate having a weight average molecular weight from 30,000 to 80,000 daltons; where the polyorganosiloxane-polycarbonate block copolymer comprises polyorganosiloxane blocks having the formula (XI): 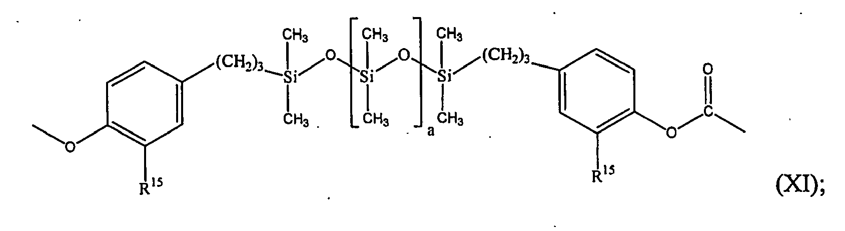 where R¹⁵ is hydrogen, methoxy or allyl, and "a" is an integer having a value from about 40 to about 55; and polycarbonate blocks having the formula (XII): 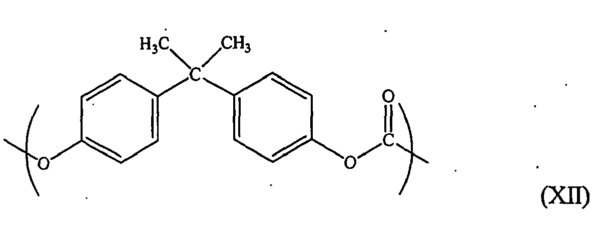 based on the overall weight of the thermoplastic nanocomposite.

In another preferred embodiment, a polymer nanocomposite comprises essentially of less than or equal to 20 weight percent of a polyorganosiloxane-polycarbonate block copolymer having a weight average molecular weight from 40,000 to 60,000 daltons, as measured with a polystyrene standard in a chloroform solvent; greater than or equal to 55 weight percent of a bisphenol A homopolycarbonate having a weight average molecular weight from 30,000 to about 80,000 daltons, as measured with the polystyrene standard in the chloroform solvent; less than or equal to 10 weight percent of montmorillonite; less than or equal to 20 weight percent of a low weight average molecular weight polycarbonate polymer, and less than or equal to 5 weight percent of a delaminating agent; where the polyorganosiloxane-polycarbonate block copolymer comprises polyorganosiloxane blocks having the formula (XI), and polycarbonate blocks having the formula (XII) based on the overall weight of the thermoplastic nanocomposite.

### EXAMPLES

Prophetic Example 1. This example describes the preparation of a low molecular weight hydroxy-endcapped bisphenol A homopolycarbonate having a weight average molecular weight of about 8,000. The procedure is also described as a part of Example 2 in Column 6, lines 27 - 42 of U.S. Patent No. 6,143,859, which is incorporated herein by reference.

A 1-liter glass melt polymerization reactor is passivated by acid washing, rinsing with deionized water and dried overnight at about 70.°C. The reactor is then charged with 130.4 grams (608.6 millimoles) of diphenyl carbonate and 120 grams (525.6 millimoles) of bisphenol A. A solid nickel stirrer is suspended in the mixture, and the reactor is purged with nitrogen and heated to about 180°C, whereupon the reaction mixture melts. Upon complete melting, it is allowed to equilibrate for 5-10 minutes, with stirring. Then, with stirring, 600 microliters of a 0.221 Molar aqueous tetramethylammonium maleate solution and 500 microliters of a 0.01 Molar aqueous sodium hydroxide solution are added. The resulting mixture is heated at about 180 °C and stirring is continued for about 5 minutes, after which the temperature is raised to about 210 °C and the pressure is decreased to about 180 millimeters of mercury, whereupon phenol begins to distill. After about 10 minutes, the desired low molecular weight bisphenol A homopolycarbonate is produced.

Example 2. This Example describes the general procedures used for preparing the polymer nanocomposite molding compositions using the low molecular weight hydroxy-end capped bisphenol A homopolycarbonate having a weight average molecular weight of about 8,000 daltons, prepared as described in Prophetic Example 1.

In one method for preparing the polymer nanocomposites, hereinafter referred to as method "X" in Table 1, the necessary individual components listed in Table 1 were weighed out separately and then blended in a Banbury mixer. Alternatively, the individual components were mixed in a solvent, such as toluene or dichloromethane; stirred under high speed stirring and under refluxing solvent, and the solvent removed by distillation and/or evaporation under reduced pressure to afford the dry polymer nanocomposite. The resulting material was then extruded using an extruder.

In another method, hereinafter referred to as "Y", the swelling agent (300 grams) was first dissolved in 1.5 liters of a suitable solvent, such as toluene or acetone. To this solution was added CLOISITE^{®} 30B (150 grams), and the resulting mixture was heated to reflux for about 2 hours with vigorous stirring (at around 2,000 revolutions per minute by using an overhead stirrer). The solvent was then removed, either by distillation at ambient or reduced pressure, followed by thorough drying under vacuum to give a dry sample of a masterbatch comprising CLOISITE^{®} 30B and the swelling agent. This method was used for preparing masterbatch samples by using epoxy swelling agents as well as R2 PC swelling agents. "R2 PC" refers to a hydroxy-endcapped bisphenol A homopolycarbonate having a weight average molecular weight of about 8,000 daltons. Bisphenol A homopolycarbonate (abbreviated as "BPA PC") used had a weight average molecular weight of about 57,000 daltons as measured by gel permeation chromatography using chloroform solvent. Molecular weights measured are relative to a polystyrene standard. Molding compositions were prepared by blending a known weight of the masterbatch sample, prepared as described above, with thermoplastic polymers, such as bisphenol A homopolycarbonate and mixtures of a bisphenol A homopolycarbonate and a bisphenol A polycarbonate - polyorganosiloxane block copolymer.

The various compositions prepared, A - E are shown in Table 1 as Comparative Example 1 and Examples 3 - 6. CLOISITE^{®} 30B was purchased from Southern Clay Products, Inc. Na-MMT refers to sodium montmorillonite. Molding compositions A and B were prepared without using antioxidant, heat stabilizer, UV stabilizer, and fire retardant additives, whereas molding compositions C - I were prepared using these additives.

The prepared compositions were used for the extrusion and molding operation using conditions shown below in Tables 2 and 3. The numbers indicate the weight percent of each component relative to the weight of the overall mixture formed by combining all of the indicated components. PC-ST refers to a polyorganosiloxane-polycarbonate block copolymer having a weight average molecular weight of about 57,000 daltons and represented by formula (IX), as shown previously.

The compositions were extruded to form pellets, which were then molded using standard molds used for producing test specimens. Compounding was carried out using W&P ZSK 25 Laboratory Twin-Screw Extruder with standard screw design for polycarbonate polymers. Compounding conditions are given in Table 2. Injection moldings were carried out using L&T Demag De-Tech 60 LNC4-E molding machine. The abbreviation "RPM" stands for revolutions per minute. The abbreviation "psi" stands for pounds per square inch.

Table 3 shows the results obtained from testing the molded samples comprising the polymer nanocomposites prepared as described above. The melt volume rate (MVR) was measured on the extruded pellets, according to ASTM D1238. MVR is defined as the volume of a sample that passes though an orifice with a piston when a sample of about 6 to about 7 grams is placed under a constant load of 1.2 kilograms at 300°C in 10 minutes, with a dwell time of about 5 minutes. Results are expressed in units of cubic centimeters per 10 minutes (cc/10 min). Tensile modulus, tensile strength at yield, tensile strain at yield, tensile strength at break, and tensile strain at break were measured in accordance with International Standards Organization procedure ISO 527. Notched izod impact (abbreviated as "NII") at -20°C were measured in accordance with ASTM D256 using a 11 Joule hammer. Weight average molecular weight (M_{w}) and number average molecular weight (Mₙ) were measured by gel permeation chromatography relative to polystyrene standards. "NA" indicates that data is not available.

Comparing the results obtained from Example 4 and Comparative Example 3 in Table 1 indicate that polymer nanocomposite molding compositions comprising 1 weight percent of a delaminated phyllosilicate such as CLOISITE® and a polyorganosiloxane - polycarbonate block copolymer shows an enhancement in the tensile modulus from about 2.2 GPa to about 2.3 GPa, while maintaining a ductile failure mode at -20°C. When about 2 weight percent of a low weight average molecular weight BPA polycarbonate is included in the nanocomposite, the resulting molding composition shows further enhancement of the tensile modulus to about 2.5 GPa, while still maintaining ductile failure mode (See Examples 3 and 4). In contrast, the molding composition comprising CLOISITE®, R2 PC oligomeric polycarbonate, and BPA homopolycarbonate, but not a polycarbonate - polyorganosiloxane copolymer shows higher tensile modulus (2.8 GPa), but exhibits a brittle failure mode at -20°C (Comparative Example 2). With other fillers, such as talc, silicon carbide, and mica, molding compositions comprising BPA homopolycarbonate and the polycarbonate - polyorganosiloxane block copolymer show enhanced tensile modulus, but they all show a brittle failure at -20°C. These results illustrate that the combination of a delaminated phyllosilicate, such as CLOISITE® together with a polymer matrix comprising a polycarbonate and a polycarbonate - polyorganosiloxane block copolymer provide useful molding compositions having the desirable combination of enhanced tensile modulus and ductile failure behavior even at temperatures as low as -20°C. Furthermore, compositions D and F show higher MVR as compared to C, thereby indicating that the polymeric nanocomposites of type D and F not only have enhanced mechanical properties, such as tensile modulus, tensile strength at yield, and ductile failure mode at low temperatures, but also relatively better processibility.

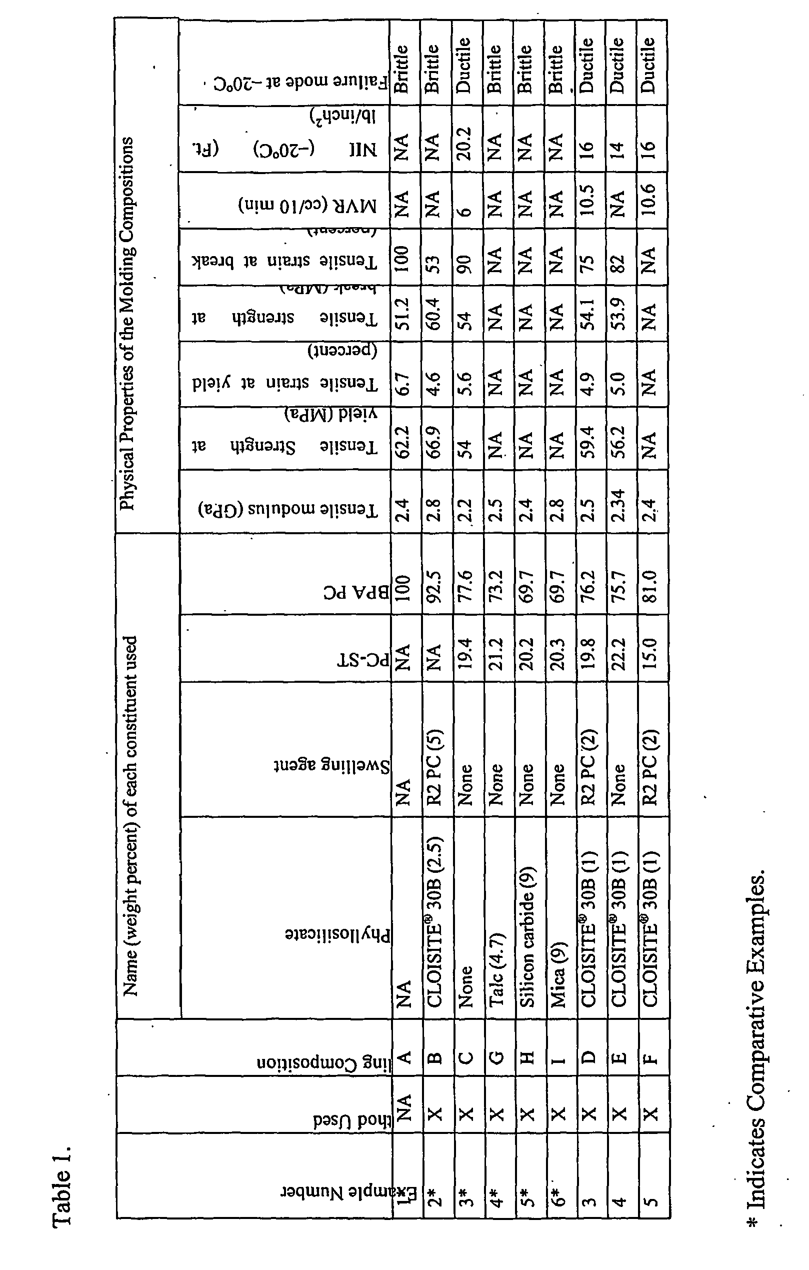

**Table 2.**

| Process Parameter | Value |
|---|---|
| Temperature Feeding Zone | 150 °C |
| Temperature Zone 1 | 220-230 °C |
| Temperature Zone 2 | 250-260 °C |
| Temperature Zone 3 | 275-280 °C |
| Temperature Zone 4 | 280-285 °C |
| Temperature of Throat/Die | 285 °C |
| Vacuum Applied? | Yes |
| Screw Speed | 300 RPM |
| Torque | 50-60% |

**Table 3.**

| Process Parameter | Value |
|---|---|
| Temperature Feeding Zone | 70-90 °C |
| Temperature Zone 1 | 250-260 °C |
| Temperature Zone 2 | 260-270 °C |
| Temperature Zone 3 | 280-285 °C |
| Temperature of Nozzle | 280-285°C |
| Temperature of Melt | 300 °C |
| Temperature of Mold | 80 °C |
| Sample Drying Time | 4 Hours |
| Sample Drying Temperature | 120 °C |
| Cycle Time | 35 Seconds |
| Injection time | 3 Seconds |
| Injection Speed | 1 inch/second |
| Injection Pressure | 1100 Psi |
| Decompression | 1 Inch |
| Switch Point | 0.25 Inch |
| Screw Speed | 100 RPM |
| Holding Pressure | 800 Psi |
| Holding Time | 10 Seconds |
| Cooling Time | 15 Seconds |

## Claims

1. A polymer nanocomposite, comprising:
an untreated phyllosilicate;
a delaminating agent;
a swelling agent; and
a polyorganosiloxane - polycarbonate copolymer.

2. The polymer nanocomposite of Claim 1, wherein said delaminating agent is selected from the group consisting of an organoonium salt, a Group IV organometallic compound, an imidazolium salt; or combinations of the foregoing delaminating agents.

3. The polymer nanocomposite of Claim 2, wherein said organoonium salt comprises an organoammonium salt or an organophosphonium salt.

4. The polymer nanocomposite of Claim 2, wherein said Group IV organometallic compound is of the formula (R⁹)ₙM(R¹⁰O)₄₋ₙ, wherein "M" is a Group IV element selected from the group consisting of silicon, titanium and zirconium; R⁹ and R¹⁰ independently comprise C₁ to C₁₂ alkyl and aryl groups; and "n" has a value of 0 to 2.

5. The polymer nanocomposite of Claim 1, wherein said untreated phyllosilicate is selected from the group consisting of allevardite, amesite, hectorite, fluorohectorite, saponite, beidellite, talc, montmorillonite, smectite, illite, sepiolite, palygorskite, muscovite, nontronite, stevensite, bentonite, mica, vermiculite, fluorovermiculite, halloysite, a fluorine - containing talc, and combinations thereof.

6. The polymer nanocomposite of Claim 1, wherein said swelling agent is selected from the group consisting of an epoxy compound, a low weight average molecular weight polycarbonate polymer, an oligomeric polyester, an oligomeric polyamide, an oligomeric polyether, an oligomeric polyesteramide, an oligomeric polyetherimide, an oligomeric polyimide, an oligomeric polyestercarbonate, phenolic resols, and mixtures thereof.

7. A molded article comprising the polymer nanocomposite of Claim 1.

8. A polymer nanocomposite comprising:
less than or equal to 5 weight percent of an untreated phyllosilicate;
less than or equal to 15 weight percent of a low weight average molecular weight polycarbonate polymer;
less than or equal to 2.5 weight percent of a delaminating agent;
less than or equal to 25 weight percent of a polyorganosiloxane-polycarbonate block copolymer having a weight average molecular weight from 40,000 to 60,000 daltons, as measured with a polystyrene standard in a chloroform solvent; and
greater than or equal to 50 weight percent of a bisphenol A homopolycarbonate having a weight average molecular weight from 30,000 to 80,000 daltons, as measured with the polystyrene standard in the chloroform solvent.

9. A polymer nanocomposite, comprising:
less than or equal to 20 weight percent of a polyorganosiloxane-polycarbonate block copolymer having a weight average molecular weight from 40,000 to about 60,000 daltons, as measured with a polystyrene standard in a chloroform solvent;
greater than or equal to 55 weight percent of a bisphenol A homopolycarbonate having a weight average molecular weight from 30,000 to 80,000 daltons, as measured with the polystyrene standard in the chloroform solvent;
less than or equal to 10 weight percent of montmorillonite;
less than or equal to 20 weight percent of a low weight average molecular weight polycarbonate polymer, and
less than or equal to 5 weight percent of a delaminating agent,
wherein said polyorganosiloxane-polycarbonate block copolymer comprises:
polyorganosiloxane blocks having the formula: 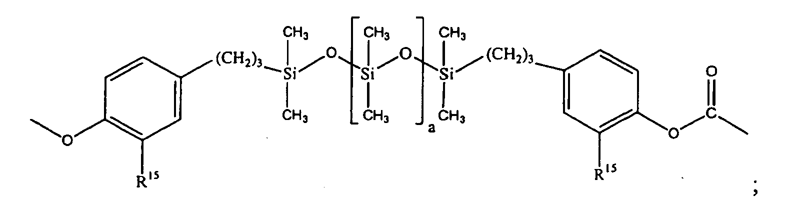
wherein R¹⁵ is hydrogen, methoxy or allyl, "a" is an integer having a value from about 40 to 5; and
polycarbonate blocks having the formula: 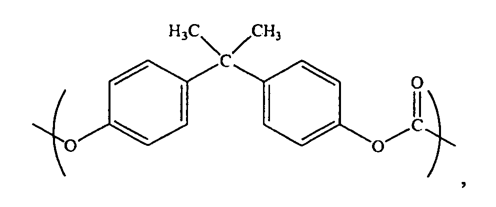
based on the overall weight of the thermoplastic nanocomposite.

10. A method for preparing a polymer nanocomposite, said method comprising:
contacting an untreated phyllosilicate with a delaminating agent selected from the group consisting of an organoonium salt, a Group IV organaometallic compound, and an imidazolium salt in a first solvent;
evaporating said first solvent to produce a delaminated phyllosilicate,
contacting said delaminated phyllosilicate with a swelling agent in a second solvent to produce an organoclay product, and
melt-blending said organoclay product with a thermoplastic polymer comprising a polyorganosiloxane-polycarbonate copolymer to produce said polymer nanocomposite.

## Patentansprüche

1. Ein polymerer Nanoverbundwerkstoff aufweisend:
ein unbehandeltes Phyllosilikat;
ein Delaminierungsmittel;
ein Quellmittel; und
ein Polyorganosiloxan-Polycarbonat-Copolymer.

2. Polymer-Nanoverbundwerkstoff nach Anspruch 1, wobei das Delaminierungsmittel ausgwählt ist aus der Gruppe bestehend aus Organooniumsalzen, einer Gruppe IV organometallischen Verbindungen, einem Imidazoliumsalz; oder Kombinationen der vorstehenden Delaminierungsmittel.

3. Polymer-Nanoverbundwerkstoff nach Anspruch 2, wobei das Organooniumsalz ein Organoammoniumsalz oder ein Organophosphoniumsalz umfasst.

4. Polymer-Nanoverbundwerkstoff nach Anspruch 2, wobei die Gruppe IV Organometallverbindung die Formel (R⁹)ₙM(R¹⁰O)₄₋ₙ hat, wobei "M" ein Gruppe IV Element ist ausgewählt aus der Gruppe bestehend aus Silizium, Titan und Zirkon; R⁹ und R¹⁰ unabhängig C₁ bis C₁₂ Alkyl- und Arylgruppen ausmachen, und "n" einen Wert von 0 bis 2 hat.

5. Polymer-Nanoverbundwerkstoff nach Anspruch 1, wobei das unbehandelte Phyllosilikat ausgewählt ist aus der Gruppe bestehend aus Allevardit, Amesit, Hectorit, Fluorhectorit, Saponit, Beidellit, Talk, Montmorillonit, Fetton, Illit, Sepiolit, Palygorskit, Muscovit, Nontronit, Stevensit, Bentonit, Glimmer, Vermiculit, Fluorvermiculit, Halloysit, Fluor enthaltender Talk und Kombinationen davon.

6. Polymer-Nanoverbundwerkstoff nach Anspruch 1, wobei das Quellmittel ausgewählt ist aus der Gruppe bestehend aus Epoxyverbindung, Polycarbonatpolymer mit niedrigem mittleren Molekulargewicht, oligomerem Polyester, oligomerem Polyamid, oligomerem Polyether, oligomerem Polyesteramid, oligomerem Polyetherimid, oligomerem Polyimid, oligomerem Polyestercarbonat, Phenolharzen und Mischungen davon.

7. Geformter Gegenstand aufweisend den Polymer-Nanoverbundwerkstoffnach Anspruch 1.

8. Polymer-Nanoverbundwerkstoff umfassend:
weniger als oder gleich 5 Gewichtsprozent unbehandeltes Phyllosilikat;
weniger als oder gleich 15 Gewichtsprozent Polycarbonatpolymer mit niedrigem mittleren Molekulargewicht;
weniger als oder gleich 2,5 Gewichtsprozent eines Delaminierungsmittels;
weniger als oder gleich 25 Gewichtsprozent eines Polyorganosiloxan-Polycarbonat-Blockcopolymers mit einem Gewichtsmittel des Molekulargewichts von 40 000 bis 60 000 Dalton, gemessen mit einem Polystyrolstandard in einem Chloroformlösungsmittel; und
größer als oder gleich 50 Gewichtsprozent eines Bisphenol A Homopolycarbonats mit einem Gewichtsmittel des Molekulargewichts von 30 000 bis 80 000 Dalton, gemessen mit einem Polystyrolstandard in einem Chloroformlösungsmittel.

9. Polymer-Nanoverbundwerkstoff umfassend:
weniger als oder gleich 20 Gewichtsprozent eines Polyorganosiloxan-Polycarbonat-Blockcopolymers mit einem Gewichtsmittel des Molekulargewichts von 40 000 bis etwa 60 000 Dalton, gemessen mit einem Polystyrolstandard in einem Chloroformlösungsmittel;
größer als oder gleich 55 Gewichtsprozent Bisphenol A Homopolycarbonat mit einem Gewichtsmittel des Molekulargewichts von 30 000 bis 80 000 Daltons, gemessen mit einem Polystyrolstandard in einem Chloroformlösungsmittel;
weniger als oder gleich 10 Gewichtsprozent Montmorillonit;
weniger als oder gleich 20 Gewichtsprozent eines Polycarbonatpolymers mit niedrigem Gewichtsmittel des Molekulargewichts, und
weniger als oder gleich 5 Gewichtsprozent eines Delaminierungsmittels,
wobei das Polyorganosiloxan-Polycarbonat-Blockcopolymer aufweist:
Polyorganosiloxanblöcke mit der Formel: 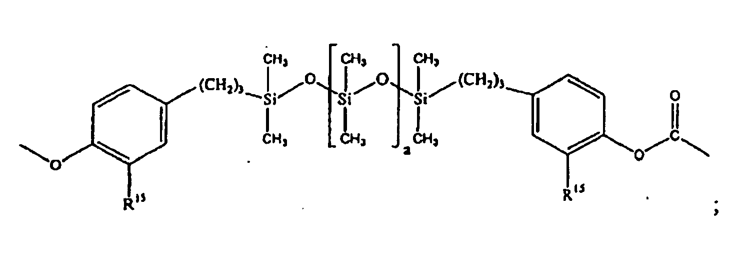
worin R¹⁵ Wasserstoff, Methoxy oder Allyl ist, "a" eine ganze Zahl mit einem Wert von etwa 40 bis 55; und
Polycarbonatblöcke mit der Formel: 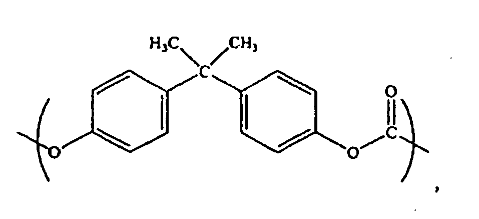
bezogen auf das Gesamtgewicht des thermoplastischen Nanoverbundwerkstoffs.

10. Verfahren zur Herstellung eines Polymer-Nanoverbundwerkstoffs, bei welchem Verfahren man:
ein unbehandeltes Phyllosilikat mit einem Delaminierungsmittel, ausgewählt aus der Gruppe bestehend aus Organooniumsalz, einer Gruppe IV Organometallverbindung und einem Imidazoliumsalz in einem ersten Lösungsmittel in Berührung bringt;
das erste Lösungsmittel abzieht, um ein delaminiertes Phyllosilikat zu erzeugen,
das delaminierte Phyllosilikat mit einem Quellmittel in einem zweiten Lösungsmittel in Berührung bringt, um ein Organotonprodukt zu erzeugen und
das Organotonprodukt mit einem thermoplastischen Polymer, umfassend ein Polyorganosiloxan-Polycarbonatcopolymer, zur Herstellung des Polymer-Nanoverbundwerkstoffs, schmelzblendet.

## Revendications

1. Nanocomposite à polymère, comprenant :
- un phyllosilicate non-traité ;
- un agent de délaminage ;
- un agent de gonflement ;
- et un copolymère polyorganosiloxane-polycarbonate.

2. Nanocomposite à polymère, conforme à la revendication 1, dans lequel ledit agent de délaminage est choisi dans l'ensemble formé par un sel d'organo-onium, un composé organo-métallique d'un élément du groupe IV, un sel d'imidazolium, et les combinaisons de tels agents de délaminage.

3. Nanocomposite à polymère, conforme à la revendication 2, dans lequel ledit sel d'organo-onium comprend un sel d'organo-ammonium ou un sel d'organo-phosphonium.

4. Nanocomposite à polymère, conforme à la revendication 2, dans lequel ledit composé organo-métallique d'un élément du groupe IV a pour formule (R⁹)ₙM(R¹⁰O)₄₋ₙ dans laquelle M représente un atome d'un élément du groupe IV, choisi parmi le silicium, le titane et le zirconium, R⁹ et R¹⁰ représentent chacun, indépendamment, un groupe alkyle en C₁₋₁₂ ou aryle, et l'indice n vaut de 0 à 2.

5. Nanocomposite à polymère, conforme à la revendication 1, dans lequel ledit phyllosilicate non-traité est choisi dans l'ensemble constitué par les suivants : allevardite, amésite, hectorite, fluorohectorite, saponite, beidellite, talc, montmorillonite, smectite, illite, sépiolite, palygorskite, muscovite, nontronite, stevensite, bentonite, mica, vermiculite, fluorovermiculite, halloysite et talc fluoré, ainsi que leurs combinaisons.

6. Nanocomposite à polymère, conforme à la revendication 1, dans lequel ledit agent de gonflement est choisi dans l'ensemble constitué par un composé époxy, un polycarbonate à faible masse molaire moyenne en poids, un polyester oligomère, un polyamide oligomère, un polyéther oligomère, un poly(ester amide) oligomère, un poly(éther imide) oligomère, un polyimide oligomère, un poly(ester carbonate) oligomère, une résine phénolique de type résol, et les mélanges de tels composés.

7. Article moulé comprenant un nanocomposite à polymère conforme à la revendication 1.

8. Nanocomposite à polymère, comprenant :
- au plus 5 % en poids d'un phyllosilicate non-traité ;
- au plus 15 % en poids d'un polycarbonate à faible masse molaire moyenne en poids ;
- au plus 2,5 % en poids d'un agent de délaminage ;
- au plus 25 % en poids d'un copolymère à blocs polyorganosiloxane-polycarbonate dont la masse molaire moyenne en poids, mesurée à l'aide d'étalons de polystyrène et dans du solvant chloroforme, vaut de 40 000 à 60 000 daltons ;
- et au moins 50 % en poids d'un homopolycarbonate de bisphénol A, dont la masse molaire moyenne en poids, mesurée à l'aide d'étalons de polystyrène et dans du solvant chloroforme, vaut de 30 000 à 80 000 daltons.

9. Nanocomposite à polymère, comprenant :
- au plus 20 % en poids d'un copolymère séquencé polyorganosiloxane-polycarbonate dont la masse molaire moyenne en poids, mesurée à l'aide d'étalons de polystyrène et dans du solvant chloroforme, vaut de 40 000 à environ 60 000 daltons ;
- au moins 55 % en poids d'un homopolycarbonate de bisphénol A, dont la masse molaire moyenne en poids, mesurée à l'aide d'étalons de polystyrène et dans du solvant chloroforme, vaut de 30 000 à 80 000 daltons ;
- au plus 10 % en poids de montmorillonite ;
- au plus 20 % en poids d'un polycarbonate à faible masse molaire moyenne en poids ;
- et au plus 5 % en poids d'un agent de délaminage;
dans lequel nanocomposite ledit copolymère à blocs polyorganosiloxane-polycarbonate comporte des blocs polyorganosiloxane, de formule : 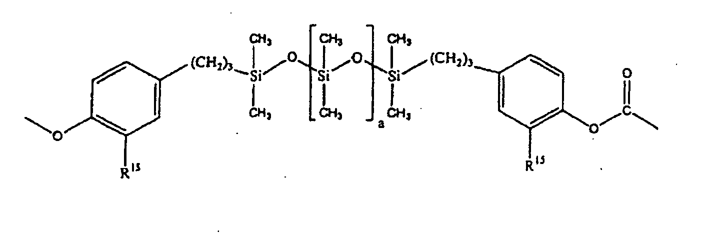 dans laquelle R¹⁵ représente un atome d'hydrogène, un groupe méthoxy
ou un groupe allyle, et l'indice "a" est un nombre entier qui vaut à peu près de 40 à 55,
et des blocs polycarbonate, de formule : 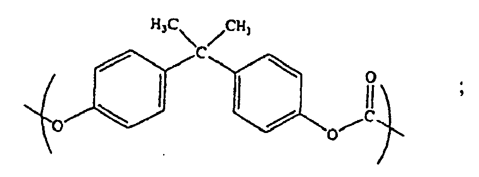 étant entendu que les pourcentages sont rapportés au poids total du nanocomposite à polymère.

10. Procédé de préparation d'un nanocomposite à polymère, lequel procédé comporte les étapes suivantes :
- mettre un phyllosilicate non-traité en contact avec un agent de délaminage choisi dans l'ensemble formé par un sel d'organo-onium, un composé organo-métallique d'un élément du groupe IV et un sel d'imidazolium, dans un premier solvant ;
- évaporer ce premier solvant, pour obtenir un phyllosilicate délaminé ;
- mettre ce phyllosilicate délaminé en contact avec un agent de gonflement, dans un deuxième solvant, pour obtenir un produit de type organo-argile ;
- et mélanger ce produit de type organo-argile avec une masse fondue de polymère thermoplastique, comprenant un copolymère polyorganosiloxane-polycarbonate, ce qui donne ledit nanocomposite à polymère.
